# EUROPÄISCHE PATENTSCHRIFT

(11) **EP 4 121 348 B1**
(45) Veröffentlichungstag und Bekanntmachung des Hinweises auf die Patenterteilung: **21.02.2024**
(21) Anmeldenummer: 21711825.6
(22) Anmeldetag: 09.03.2021
(51) Int. Cl.: B63G 8/39, B63B 21/66, G01V 1/38

(54) **VORRICHTUNG ZUM EINHOLEN UND/ODER AUSBRINGEN EINER SCHLEPPANTENNE VON EINEM WASSERFAHRZEUG**
DEVICE FOR RETRACTING AND/OR DEPLOYING A TOWING ANTENNA FROM A WATER VEHICLE
DISPOSITIF POUR RETRACER ET/OU DEPLOYER UNE ANTENNE DE REMORQUAGE A PARTIR D'UN VEHICULE NAUTIQUE

(30) Priorität: 20.03.2020 DE 102020203607
(43) Veröffentlichungstag der Anmeldung: 25.01.2023
(73) Patentinhaber: ATLAS ELEKTRONIK GmbH, 28309 Bremen (DE); thyssenkrupp AG, 45143 Essen (DE)
(72) Erfinder: LONKAI, Andreas, 28755 Bremen (DE); MARQUARDT, Dennis, 28327 Bremen (DE)
(74) Vertreter: thyssenkrupp Intellectual Property GmbH
(86) Internationale Anmeldenummer: PCT/EP2021/055952
(87) Internationale Veröffentlichungsnummer: WO 2021/185634

(56) Entgegenhaltungen:
- EP-A1- 2 469 507
- EP-A1- 3 086 142
- DE-A1- 10 250 560
- GB-A- 2 517 756
- US-A- 5 119 751
- US-A1- 2009 154 295
- US-A1- 2010 226 204
- US-A1- 2019 377 097

## Beschreibung

Die Erfindung bezieht sich auf eine Vorrichtung zum Einholen und Ausbringen einer Schleppantenne. Typischerweise wird die Vorrichtung auf einem Wasserfahrzeug, beispielsweise einem Schiff oder einem U-Boot eingesetzt. Die Schleppantenne zeichnet sich dadurch aus, dass es ein langes (typischerweise mehrere hundert Meter), biegeschlaffes (oder biegeweiches), Objekt ist. Biegeschlaff meint, dass das Objekt (die Schleppantenne) auf eine Winde aufrollbar ist.

Das Ausbringen und das Einholen von biegeweichen, langen Objekten, im Folgenden wird das Beispiel von Schleppantennen verwendet, ist nicht trivial. Typischerweise wird die Schleppantenne mittels eines Zugseils mit einer auf dem Wasserfahrzeug angeordneten Winde verbunden. Schleppantenne und Zugseil werden nachfolgend als Schleppantennenanordnung bezeichnet. Das Einholen und Ausbringen erfolgt typischerweise bei der Fahrt des Wasserfahrzeugs. Beim Ausbringen der Schleppantenne wird diese überwiegend durch ihr Eigengewicht und den Wasserwiderstand von der Winde abgerollt. Schleppantennen sind biegeweich und können nicht durch die Winde allein ausgeschoben werden. Eine Windensteuerung regelt die Geschwindigkeit des Abrollens der Schleppantenne und des Zugseils. Zu geringe Biegeradien durch beim ungeregelten Ausfahren auftretende Kinken können die Schleppantenne beschädigen. Beim Einholen der Schleppantenne regelt die Winde die Geschwindigkeit des Aufrollens der Schleppantenne und des Zugseils. Schleppantennen sind zugempfindlich und können beim ungeregelten Einfahren überlastet und beschädigt werden.

DE 102 50 560 A1 betrifft eine auf einem Wasserfahrzeug installierbare Ausbringvorrichtung zum Fieren einer schlauchartigen Unterwasser-Schleppantenne. Ähnliche Gegenstände sind in den Offenbarungen GB 2 517 756 A, EP 2 369 507 A1, EP 3 086 142 A1, US 2019/377097 A1, US 2009/154295 A1, US 5 119 751 A und US 2010/226204 offenbart.

Das korrekte Aufrollen der Schleppantenne und des Zugseils auf die Winde und das korrekte Abrollen der Schleppantenne und des Zugseils von der Winde wird derzeit über eine Kamera beobachtet, die auf die Winde gerichtet ist. Unregelmäßigkeiten im Auf- bzw. Abwickeln der Schleppantennenanordnung können so erkannt werden und das Auf- bzw. Abrollen verlangsamt oder komplett gestoppt werden. Häufig liegen Ursachen für Unregelmäßigkeiten jedoch nicht bei der Winde, sondern die Schleppantennenanordnung läuft beispielsweise nicht richtig über eine der Führungsrollen, so dass die Schleppantennenanordnung nicht durchgehend unter Zugspannung ist. Tritt die Zugspannung unvermittelt wieder ein, herrschen für einen kurzen Zeitraum viel größere Kräfte als bei einer dauerhaften Zugbelastung, die zum Reißen der Schleppantennenanordnung führen kann. Weiterhin ist es hilfreich zu erkennen, wann die Schleppantenne vollständig aufgerollt ist. Dies ist an der Winde nur indirekt über die Zahl der Umdrehungen zu ermitteln. Da die Schleppantennenanordnung auf der Winde sowie die Winde selber allerdings einen gewissen Schlupf aufweist, ist nicht präzise zu ermitteln, wann die Schleppantenne vollständig aufgerollt ist. Dies ist nur am Ende der Schleppantenne möglich. Dort sind (teilweise mechanische) Endschalter angebracht, die jedoch nur eine kurze Lebensdauer aufweisen und dann in der Praxis häufig überbrückt werden, statt diese auszutauschen. Dreht die Winde zu weit, kann auch dies zum Reißen der Schleppantennenanordnung führen. Weiterhin ist die Kamera und die Winde teilweise rauen Bedingungen über Wasser oder unter Wasser ausgesetzt, so dass die Kameralinse verschmutzen kann oder die Sicht auf die Winde durch trübes Wasser eingeschränkt ist.

Die Aufgabe der vorliegenden Erfindung besteht deshalb darin, ein verbessertes Konzept für das Einholen und Ausbringen von Schleppantennen zu schaffen.

Die Aufgabe wird durch den Gegenstand der unabhängigen Patentansprüche gelöst. Weitere vorteilhafte Ausführungsformen sind der Gegenstand der abhängigen Patentansprüche.

Ausführungsbeispiele zeigen eine Vorrichtung zum Einholen und/oder Ausbringen einer Schleppantenne von einem Wasserfahrzeug. Die Vorrichtung umfasst eine Schleppantennenanordnung, eine Winde mit einer Windensteuerung, einen Positionsinformationsträger und einen Positionsinformationsleser. Die Schleppantennenanordnung umfasst die Schleppantenne, wobei die Schleppantenne eine Vielzahl von miteinander verbundenen, insbesondere konsekutiv angeordneten, Unterwasserschallempfängern aufweist. Anders ausgedrückt sind die Unterwasserschallempfänger (äquidistant) entlang eines Verbindungsseils angeordnet. Optional umfasst die Schleppantennenanordnung ferner ein Zugseil, das die Schleppantenne mit der Winde verbindet. Unterwasserschallempfänger werden auch als Hydrophone bezeichnet. Die Schleppantenne wird vorteilhafterweise für aktive oder passive Sonaranwendungen eingesetzt. D.h., es kann sich um eine Sonar-Schleppantenne handeln. Die Unterwasserschallempfänger sind insbesondere mechanisch miteinander verbunden. Eine Recheneinheit liest die empfangenen Informationen der einzelnen Unterwasserschallempfänger aus.

Die Winde ist ausgebildet, die Schleppantennenanordnung relativ zu dem Positionsinformationsleser zu bewegen, so dass der Positionsinformationsträger den Positionsinformationsleser passiert. D.h., die Winde kann die Schleppantennenanordnung auf- bzw. abrollen. Dabei werden die Positionsinformationsträger an den Positionsinformationslesern vorbeigeführt, d.h. die Positionsinformationsträger passieren die Positionsinformationsleser.

Es gibt nun zwei Möglichkeiten, den Positionsinformationsträger und den Positionsinformationsleser anzuordnen. Entweder ist der Positionsinformationsträger an einer vorbestimmten Position der Schleppantennenanordnung angeordnet und der Positionsinformationsleser ist an dem Wasserfahrzeug angeordnet. Alternativ ist der Positionsinformationsleser an einer vorbestimmten Position der Schleppantennenanordnung angeordnet ist und der Positionsinformationsträger ist an dem Wasserfahrzeug angeordnet. Nachfolgend wird einzig die erstgenannte, Option, dass der Positionsinformationsträger an der Schleppantennenanordnung angeordnet ist, beschrieben. Um die andere Option zu erhalten, d.h. dass der Positionsinformationsleser an der Schleppantennenanordnung angeordnet ist, sind an den Stellen der Beschreibung, die auf die räumliche Anordnung von Positionsinformationsleser und Positionsinformationsträger Bezug nehmen, beide Begriffe gegeneinander auszutauschen.

Diese zweite Option, dass der Positionsinformationsleser an der Schleppantennenanordnung angeordnet ist, hat den Vorteil, dass die Schleppantennenanordnung schon eine eingebaute Architektur zur Energieversorgung und zur Datenübertragung aufweist. Die Positionsinformationsleser müssten demnach nur an diese vorhandene Architektur angeschlossen werden. Damit könnten die Positionsinformationsträger in die feste Hardware des Wasserfahrzeugs verbaut werden, der Nachrüstungsaufwand wäre hier also geringer. Für die erste Option spricht, dass die Positionsinformationsleser teurer sind als die Positionsinformationsträger und somit die Schleppantennenanordnung teurer wird, insbesondere wenn eine Vielzahl von Positionsinformationslesern an der Schleppantennenanordnung angeordnet sind.

Der Positionsinformationsträger ist an einer vorbestimmten Position der Schleppantennenanordnung angeordnet. Die vorbestimme Position kann an der Schleppantenne oder dem Zugseil sein. Weitere untenstehende Ausführungsbeispiele zeigen auch, dass sowohl an der Schleppantenne als auch an dem Zugseil Positionsinformationsträger angeordnet sind. Es ist möglich, den Positionsinformationsträger passiv oder aktiv auszugestalten. Passive Positionsinformationsträger sind z.B. QR-Codes, Barcodes, Magnete, etc. Aktive Positionsinformationsträger sind z.B. RFID-Transponder. Die Position ist vorbestimmt, da sie als Information in dem Positionsinformationsträger hinterlegt oder in der Windensteuerung gespeichert ist. Ferner können die Positionsinformationsträger an neuralgischen Punkten der Schleppantennenanordnung angeordnet sein oder einen äquidistanten Abstand zueinander aufweisen, so dass die Position vorbestimmt ist.

Die vorbestimmte Position kann in dem Positionsinformationsträger hinterlegt sein. Dies ist als absolute Positionsangabe möglich (z.B. Position=103m). In Ausführungsbeispiele mit einer Vielzahl von Positionsinformationsträgern auch als relative Positionsangabe (z.B. vorheriger Positionsinformationsträger = -20cm, nächster Positionsinformationsträger =+25cm) oder als Index (z.B. Positionsinformationsträger 27). Die Position der Positionsinformationsträger ist dann in der Windensteuerung oder einer Recheneinheit gespeichert oder sie wird berechnet, beispielsweise wenn die Positionsinformationsträger äquidistant angeordnet sind. Bei einer Vielzahl von äquidistant angeordneten Positionsinformationsträgern reicht es ferner aus, dass die Positionsinformationsträger die Information tragen, dass es sich um einen Positionsinformationsträger handelt. Durch Zählen und die Kenntnis, in welche Richtung sich die Winde dreht, kann die Windensteuerung dann die jeweilige absolute Position ermitteln.

Der Positionsinformationsleser ist an dem Wasserfahrzeug angeordnet. Der Positionsinformationsleser ist ein Sensor, der ausgebildet ist, den Positionsinformationsträger auszulesen. Der Positionsinformationsleser kann demnach ein Barcodescanner, ein QR-Code Scanner, ein RFID-Leser, ein hydroakustischer Sensor, ein Magnetfeldsensor etc. sein. Ferner ist der Positionsinformationsleser derart an dem Wasserfahrzeug oder der Schleppantenne angeordnet, dass dieser den Positionsinformationsträger auch auslesen kann.

Der Positionsinformationsleser ist ferner ausgebildet, beim Passieren des Positionsinformationsträgers die vorbestimmte Position zu ermitteln. Das Ermitteln der vorbestimmten Position ist abhängig von der Art des Positionsinformationsträgers, bzw. der im Positionsinformationsträger gespeicherten Information. Das Ermitteln der vorbestimmten Position umfasst z.B. das Auslesen der (absoluten oder relativen) Positionsangabe aus dem Positionsinformationsträger oder auch das bloße Erkennen, dass es sich um einen Positionsinformationsträger handelt. Ferner erfolgt in den beiden letztgenannten Fällen vorteilhafterweise eine Umrechnung der ausgelesenen relativen Positionsangabe bzw. der ermittelten relativen Position (basierend auf der Zählung der erkannten Positionsinformationsträger) eine Bestimmung der absoluten vorbestimmten Position, an der der Positionsinformationsträger angeordnet ist. In Kenntnis der absoluten vorbestimmten Position ist die Position der Schleppantennenanordnung relativ zu dem Wasserfahrzeug, bzw. genauer dem Positionsinformationsleser bekannt. Weist der Positionsinformationsträger nur die Information auf, dass es sich um einen Positionsinformationsträger handelt, ist dies der einzige Anwendungsfall, bei dem der Positionsinformationsleser keine Information hinsichtlich der vorbestimmten Position von dem Positionsinformationsträger auslesen kann.

Nunmehr ist die Windensteuerung ausgebildet, die Winde basierend auf der ermittelten vorbestimmten Position zu steuern. D.h. die Winde kann sich insbesondere langsamer drehen oder stoppen, wenn anhand der ermittelten vorbestimmten Position oder dem Ausbleiben der Ermittlung der vorbestimmten Position, eine Unregelmäßigkeit beim Auf- bzw. Abrollen detektiert wird.

Idee ist es, die fehleranfällige Bestimmung der aktuellen Position beim Einholen oder Ausbringen der Schleppantenne mittels einer Kamera und/oder Endschaltern durch eine verlässlichere und in Ausführungsbeispielen auch präzisere Bestimmung der Position der Schleppantenne zu ersetzen.

In Ausführungsbeispielen weist der Positionsinformationsträger eine Information hinsichtlich der vorbestimmten Position auf. Der Positionsinformationsleser ist ausgebildet, die Information beim Passieren des Positionsinformationsträgers auszulesen, um die vorbestimmte Position zu ermitteln. Dies ist vorteilhaft, da somit die vorbestimmte Position anhand von nur einem ausgelesenen Positionsinformationsträger ermittelt werden kann und Unregelmäßigkeiten beim Ausbringen oder Einholen somit auch direkt nach dem Beginn des Einhol- bzw. Ausbringvorgangs erkennt werden können.

In weiteren Ausführungsbeispielen umfasst der Positionsinformationsträger einen Transponder, der ausgebildet ist, eine Information hinsichtlich der vorbestimmten Position in elektromagnetischen Wellen zu kodieren. Als Transponder kann insbesondere ein RFID-Transponder (RFID: radio-frequency identification, dt.: Identifizierung mit Hilfe elektromagnetischer Wellen) eingesetzt werden. Der Positionsinformationsleser ist ausgebildet, die kodierten elektromagnetischen Wellen beim Passieren des Positionsinformationsträgers zu empfangen und die Information hinsichtlich der vorbestimmten Position auszulesen um die vorbestimmte Position zu ermitteln. Typischerweise ist der Positionsinformationsleser ausgebildet, (bekannte) elektromagnetische Wellen auszusenden, die von dem Transponder zum Kodieren der vorbestimmten Position beeinflusst und dann zurückreflektiert werden. Ein solches Verfahren kann ohne externe Energieversorgung für die Positionsinformationsträger auskommen. Der Positionsinformationsleser erhält die Energie aus den elektromagnetischen Wellen. Es sind aber auch andere Verfahren zum Kodieren der vorbestimmten Position möglich.

In Ausführungsbeispielen ist der Positionsinformationsleser ausgebildet, die ermittelte vorbestimmte Position an die Windensteuerung zu senden. Die Windensteuerung kann dann eine Rotationsgeschwindigkeit der Winde in Abhängigkeit von der ausgelesenen vorbestimmten Position einstellen. Insbesondere kann sich die Winde langsamer drehen oder stoppen, wenn anhand der ermittelten vorbestimmten Position oder dem Ausbleiben der Ermittlung der vorbestimmten Position, eine Unregelmäßigkeit beim Auf- bzw. Abrollen detektiert wird.

Weitere Ausführungsbeispiele zeigen die Schleppantennenanordnung mit einem Zugseil zusätzlich zu der Schleppantenne. Die vorbestimmte Position des Positionsinformationsträgers wird nun derart gewählt, dass die vorbestimmte Position einen Übergang zwischen dem Zugseil und der Schleppantenne beschreibt. D.h., der Positionsinformationsträger ist vorteilhafterweise derart an der Schleppantennenanordnung angeordnet, dass der Positionsinformationsleser den Positionsinformationsträger in dem Moment detektiert, wenn die Schleppantenne vollständig von der Winde abgerollt ist, alternativ, wenn sich die Schleppantenne vollständig im Wasser befindet. Die Windensteuerung ist nun ausgebildet, das Zugseil mit einer Geschwindigkeit auf- und/oder abzurollen, die schneller ist, als eine Geschwindigkeit, mit der die Schleppantenne auf- und/oder abgerollt wird. In anderen Worten kann die Windensteuerung die Rotationsgeschwindigkeit der Winde vergrößern, wenn nur das unempfindlicherer Zugseil auf- oder abgerollt wird. Wird jedoch die mit Unterwasserschallempfängern und Elektronik ausgestattete Schleppantenne auf- oder abgerollt, kann sich die Rotationsgeschwindigkeit der Winde reduzieren um die Schleppantenne nicht zu beschädigen.

In Ausführungsbeispielen ist die vorbestimmte Position des Positionsinformationsträgers derart gewählt, dass die vorbestimmte Position eine Endposition der Schleppantennenanordnung beschreibt. Die Windensteuerung ist dann ausgebildet, ein Aufrollen der Schleppantennenanordnung zu stoppen, wenn der Positionsinformationsleser die vorbestimmte Position ermittelt.

Ist bereits ein Positionsinformationsträger an der Schleppantennenanordnung angeordnet, so ist ein zweiter Positionsinformationsträger an der Schleppantennenanordnung an einer zweiten vorbestimmten Position angeordnet, wobei die zweite vorbestimmte Position eine Endposition der Schleppantennenanordnung beschreibt. Die Windensteuerung ist dann ausgebildet, ein Aufrollen der Schleppantennenanordnung zu stoppen, wenn der Positionsinformationsleser die zweite vorbestimmte Position ermittelt.

Das vorgenannte Ausführungsbeispiel ermöglicht die Detektion des Endes der Schleppantenne. Der entsprechende Positionsinformationsträger kann nun derart an der Schleppantennenanordnung angeordnet sein, dass diese bei der Detektion desselben mittels der Positionsinformationslesers vollständig aufgerollt ist. Vollständig aufgerollt heißt, dass sich die Schleppantennenanordnung innerhalb eines großzügigen Puffers befindet, der benötigt wird, um Faktoren, die ein sofortiges Stoppen beim Detektieren des Positionsinformationsträgers verhindern, zu berücksichtigen, ohne dass die Gefahr besteht, dass die Schleppantennenanordnung reißt.

In weiteren Ausführungsbeispielen ist die vorbestimmte Position des Positionsinformationsträgers derart gewählt, dass die vorbestimmte Position eine Endposition der Schleppantennenanordnung beim Ausfahren beschreibt. Die Windensteuerung ist dann ausgebildet, ein Abrollen der Schleppantennenanordnung zu stoppen, wenn der Positionsinformationsleser die vorbestimmte Position ermittelt.

Ist bereits ein Positionsinformationsträger und/oder der zweite Positionsinformationsträger an der Schleppantennenanordnung angeordnet, ist ein weiterer Positionsinformationsträger an der Schleppantennenanordnung an einer weiteren vorbestimmten Position angeordnet, wobei die weitere vorbestimmte Position eine Endposition der Schleppantennenanordnung beim Ausfahren beschreibt. Die Windensteuerung ist dann ausgebildet, ein Abrollen der Schleppantennenanordnung zu stoppen, wenn der Positionsinformationsleser die weitere vorbestimmte Position ermittelt.

Das vorgenannte Ausführungsbeispiel ermöglicht die Detektion des Endes der Schleppantenne. Der entsprechende Positionsinformationsträger kann nun derart an der Schleppantennenanordnung angeordnet sein, dass diese bei der Detektion desselben mittels der Positionsinformationslesers vollständig abgerollt ist. Vollständig abgerollt heißt, dass sich die Schleppantennenanordnung innerhalb eines großzügigen Puffers befindet, der benötigt wird, um Faktoren, die ein sofortiges Stoppen beim Detektieren des Positionsinformationsträgers verhindern, zu berücksichtigen, ohne dass die Gefahr besteht, dass die Schleppantennenanordnung reißt. Insbesondere besteht die Gefahr bei einem zu späten Stoppen des Abrollvorgangs, dass sie Schleppantennenanordnung von der Winde löst oder die Winde überdreht und die Schleppantennenanordnung, insbesondere ein Teil des Zugseils, "falschherum" auf die Winde aufgewickelt wird. Der großzügige Puffer schließt auch ein, dass die Schleppantennenanordnung noch für eine vorbestimmte Zeit (z.B. mittels eines Timers) weiter abgerollt wird, wobei das Detektieren des Positionsinformationsträgers, der die Endposition der Schleppantennenanordnung beim Ausfahren beschreibt, den die vorbestimmte Zeit startet.

Weitere Ausführungsbeispiele zeigen die Vorrichtung mit einem zweiten Positionsinformationsleser, der an dem Wasserfahrzeug beabstandet von dem Positionsinformationsleser angeordnet ist. Die Winde ist ausgebildet, die Schleppantennenanordnung relativ zu dem zweiten Positionsinformationsleser zu bewegen, so dass der Positionsinformationsträger den zweiten Positionsinformationsleser passiert. Der zweite Positionsinformationsleser ist ausgebildet, beim Passieren des Positionsinformationsträgers die vorbestimmte Position des passierenden Positionsinformationsträgers zu ermitteln. Das heißt, es wird eine Redundanz beim Auslesen der Positionsinformationsleser aufgebaut.

In weiteren Ausführungsbeispielen ist die Windensteuerung ausgebildet, das Eintreffen einer Positionsinformation zu prädizieren und wenn die prädizierte Positionsinformation von dem Positionsinformationsleser ausbleibt, die Rotationsgeschwindigkeit der Winde zu reduzieren, insbesondere die Winde anzuhalten. Das heißt, die Windensteuerung berechnet, wann der Positionsinformationsträger den Positionsinformationsleser passieren müsste. Die Berechnung erfolgt beispielsweise unter Berechnung einer (mittleren) Rotationsgeschwindigkeit der Winde. Dies ist insbesondere vorteilhaft, wenn an der Schleppantennenanordnung eine Vielzahl von Positionsinformationsträgern angeordnet sind und eine Zeitdauer zwischen der Detektion eines aktuellen Positionsinformationsträgers und der Detektion des folgenden Positionsinformationsträgers bestimmt werden kann. Dann kann ein Durchhängen der Schleppantennenanordnung, beispielsweise weil dieses sich beim Abrollen verkantet hat, detektiert werden. Ebenso ist es möglich, zu berechnen, wann der Positionsinformationsträger den (ersten) Positionsinformationsleser passieren müsste, wenn der Zeitpunkt, an dem der Positionsinformationsleser den (zweiten) Positionsinformationsträger passiert hat, bekannt ist.

In einer Ausgestaltung ist die Windensteuerung dann ausgebildet, die von dem Positionsinformationsleser ermittelte vorbestimmte Position zu erhalten und einen Zeitpunkt zu prädizieren, an dem die vorbestimmte Position oder eine weitere vorbestimmte Position von dem zweiten Positionsinformationsleser ermittelt werden müsste und wenn der Zeitpunkt verstrichen ist, ohne dass der zweite Positionsinformationsleser die vorbestimmte Position oder die weitere vorbestimmte Position ermittelt hat, eine Rotationsgeschwindigkeit der Winde zu reduzieren. Es ist somit möglich, in Kenntnis der (mittleren) Rotationsgeschwindigkeit der Winde und des Abstands zwischen dem Positionsinformationsleser und dem zweiten Positionsinformationsleser den Zeitpunkt vorherzusagen, an dem ein Positionsinformationsträger, der einen Positionsinformationsleser passiert hat, den anderen Positionsinformationsleser passieren sollte. Wird der Positionsinformationsleser zu diesem Zeitpunkt nicht detektiert, ist davon auszugehen, dass die Schleppantennenanordnung zwischen dem Positionsinformationsleser und dem zweiten Positionsinformationsleser durchhängt, also dort keine ausreichende Zugspannung auf der Schleppantennenanordnung vorliegt. Basierend auf dieser Erkenntnis kann die Rotationsgeschwindigkeit der Winde dann verlangsamt werden oder die Winde wird gestoppt. Weitere Ausführungsbeispiele, in denen die Windensteuerung das Eintreffen eines Positionsinformationsträgers prädiziert sind obenstehend beschrieben. Diese sind auf das Ausführungsbeispiel mit zwei Positionsinformationslesern analog anwendbar.

In Ausführungsbeispielen weist die Vorrichtung eine Vielzahl von Positionsinformationsträgern auf, wobei der Positionsinformationsträger ein Positionsinformationsträger aus der Vielzahl von Positionsinformationsträgern ist, wobei die Positionsinformationsträger der Vielzahl von Positionsinformationsträgern jeweils an einer vorbestimmten Position der Schleppantennenanordnung angeordnet sind. Die Positionsinformationsträger weisen vorteilhafterweise die gleichen Merkmale auf, jedoch eine unterschiedliche vorbestimmte Position an der Schleppantennenanordnung. Die Winde ist ausgebildet, die Schleppantennenanordnung relativ zu dem Positionsinformationsleser zu bewegen, so dass die Positionsinformationsträger der Vielzahl von Positionsinformationsträger den Positionsinformationsleser passieren. In anderen Worten werden die Positionsinformationsträger beim Auf- bzw. Abrollen der Schleppantennenanordnung an dem Positionsinformationsleser vorbeigeführt. Der Positionsinformationsleser ist ausgebildet, beim Passieren eines Positionsinformationsträgers der Vielzahl von Positionsinformationsträgern die zugehörige vorbestimmte Position zu ermitteln. Somit liefern mehrere Positionsinformationsträger die jeweilige vorbestimmte Position, wodurch die aktuelle Position der Schleppantennenanordnung präziser bestimmt werden kann. Eine schnellere Reaktion auf Unregelmäßigkeiten wird ermöglicht.

Vorteilhafterweise sind die Positionsinformationsträger der Vielzahl von Positionsinformationsträgern äquidistant angeordnet. Das heißt, der Abstand zwischen benachbarten Positionsinformationsträgern der Vielzahl von Positionsinformationsträgern ist (bei einer abgerollten Schleppantenne) jeweils gleich. Dies ermöglicht es, die vorgenannten Möglichkeiten zur Prädiktion des Eintreffens eines Positionsinformationsträgers zu vereinfachen.

In einem weiteren Ausführungsbeispiel ist der Positionsinformationsleser ein Positionsinformationsleser aus einer Vielzahl von Positionsinformationslesern. Die Positionsinformationsleser der Vielzahl von Positionsinformationsleser sind äquidistant in einem ersten Abstand zueinander angeordnet. Die Vielzahl von Positionsinformationsträgern sind äquidistant in einem zweiten Abstand zueinander angeordnet, wobei sich der erste Abstand von dem zweiten Abstand unterscheidet. Das heißt, ein Raster, in dem die Positionsinformationsleser angeordnet sind unterscheidet sich von dem Raster, in dem die Positionsinformationsträger angeordnet sind. Vorteilhafterweise sind der erste Abstand und der zweite Abstand, bzw. die Raster, auch keine ganzzahligen Vielfachen voneinander. Dies ermöglicht eine bessere Auflösung der vorbestimmten Position, da typischerweise irgendein Positionsinformationsleser einen Positionsinformationsträger detektiert, bzw. das stärkste Signal erhält. Die anderen Positionsinformationsleser empfangen jedoch kein oder nur ein deutlich schwächeres Signal. Dies ist vorteilhaft, da die Anordnung der Positionsinformationsträger auf der Schleppantenne nicht willkürlich erfolgen kann. So ist die Anordnung auf einem Unterwasserschallempfänger nachteilig, da die Empfangscharakteristik des Unterwasserschallemfängers beeinflusst wird, insbesondere dessen Empfindlichkeit. Bei typischen Schleppantennen wären somit nur Abstände zwischen den Positionsinformationsträgern (zweiter Abstand) zwischen 20 cm und 90 cm möglich. Mit nur einem Positionsinformationsleser ergäbe sich eine entsprechende Auflösung für die Position der Schleppantennenanordnung auf der Winde. Werden nun eine Vielzahl von Positionsinformationsleser eingesetzt, kann bei einer geeigneten Anordnung eine Auflösung im (niedrigen) einstelligen Zentimeterbereich erreicht werden.

Analog ist ein entsprechendes Verfahren zum Einholen und Ausbringen einer Schleppantenne von einem Wasserfahrzeug offenbart. Das Verfahren weist folgende Schritte auf: Bewegen einer Schleppantennenanordnung, die die Schleppantenne umfasst, relativ zu einem an dem Wasserfahrzeug angeordneten Positionsinformationsleser, so dass ein an einer vorbestimmten Position der Schleppantennenanordnung angeordneter Positionsinformationsträger den Positionsinformationsleser passiert; Ermitteln der vorbestimmten Position mit dem Positionsinformationsleser; Steuern einer Winde zum Einholen und Ausbringen der Schleppantennenanordnung unter Berücksichtigung der ermittelten vorbestimmten Position.

Bevorzugte Ausführungsbeispiele der vorliegenden Erfindung werden nachfolgend Bezug nehmend auf die beiliegenden Zeichnungen erläutert. Es zeigen:
Fig. 1: eine schematische Darstellung eines Wasserfahrzeugs in einer Seitenansicht mit einer Vorrichtung zum Einholen und Ausbringen einer Schleppantenne; und
Fig. 2: eine schematische Darstellung der Schleppantenne in einer Seitenansicht mit Positionsinformationsträgern und entsprechenden Positionsinformationslesern.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

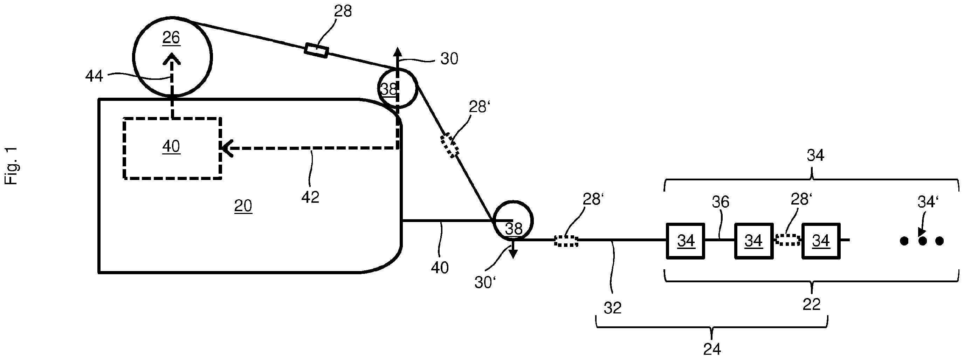

Fig. 1 zeigt eine schematische Darstellung eines Abschnitts eines Wasserfahrzeugs 20 in einer Seitenansicht. Das Wasserfahrzeug 20 weist die Vorrichtung zum Einholen und Ausbringen einer Schleppantenne 22 von dem Wasserfahrzeug 20 auf. Die Vorrichtung umfasst eine Schleppantennenanordnung 24, eine Winde 26, einen Positionsinformationsträger 28 und einen Positionsinformationsleser 30.

Die Schleppantennenanordnung 24 umfasst die Schleppantenne 22 und optional das Zugseil 32. Das Zugseil kann die Schleppantenne 22 mit der Winde 26 (mechanisch) verbinden. Die Schleppantenne 22 umfasst eine Vielzahl von miteinander verbundenen, insbesondere konsekutiv angeordneten, Unterwasserschallempfänger 34. Punkte 34' deuten an, dass die Zahl der Unterwasserschallempfänger 34 beliebig sein kann. Die Unterwasserschallempfänger 34 sind mittels eines Verbindungsseils 36 mechanisch miteinander verbunden. Das Verbindungsseil 36 kann ferner eine elektrische Verbindung (über das optionale Zugseil 32) von dem Wasserfahrzeug 20 zu den Unterwasserschallempfängern 34 herstellen.

Der Positionsinformationsträger 28 ist an einer vorbestimmten Position an der Schleppantennenanordnung 24, hier beispielhaft an dem optionalen Zugseil 32, angeordnet. Die Schleppantennenanordnung 24 kann über Umlenkrollen 38 von dem Wasserfahrzeug 20 in das Wasser geführt werden. Die Umlenkrollen können mittels eines Befestigungsmittels 40 mit dem Wasserfahrzeug 20 (mechanisch) verbunden sein.

Die Winde 26 weist eine Windensteuerung 40 auf, die beispielsweise als Recheneinheit im Wasserfahrzeug 20 oder in der Winde angeordnet sein kann. Die Winde 26 kann die Schleppantennenanordnung 24, gesteuert von der Windensteuerung 40, relativ zu dem Positionsinformationsleser 30 bewegen, so dass der Positionsinformationsträger 28 den Positionsinformationsleser 30 passiert. Damit der Positionsinformationsträger 28 den Positionsinformationsleser 30 passiert, müsste die Schleppantennenanordnung noch weiter von der Winde 26 abgerollt werden.

Der Positionsinformationsleser 30 ist an dem Wasserfahrzeug 20, hier beispielhaft in Höhe einer Umlenkrolle 38 angeordnet. Der Positionsinformationsleser 30 kann die vorbestimmte Position, an der der Positionsinformationsträger 28 an der Schleppantennenanordnung 24 angeordnet ist, beim Passieren des Positionsinformationsträgers 28 ermitteln. Optional weist die Schleppantennenanordnung 24 weitere Positionsinformationsträger 28' auf. So kann der Positionsinformationsleser beim Passieren eines der Positionsinformationsträger 28, 28' die vorbestimmte Position des entsprechenden Positionsinformationsträgers bestimmen. Ferner weist die Vorrichtung optional einen oder mehrere weitere Positionsinformationsleser 30' auf. Mittels des weiteren Positionsinformationslesers 30' kann eine Unregelmäßigkeit beim Aufrollen bzw. Abrollen der Schleppantennenanordnung präziser festgestellt werden. So kann beispielsweise zwischen dem Positionsinformationsleser 30 und dem weitern Positionsinformationsleser 30' detektiert werden, wenn die Schleppantennenanordnung dort nicht unter Zug steht, d.h. beispielsweise durchhängt.

Die Windensteuerung 40 kann die vorgegebene Position oder eine entsprechende Information hierüber von dem Positionsinformationsleser 30 beispielsweise über eine Datenverbindung 42 erhalten. Die Windensteuerung kann die Winde 26 nun, beispielsweise über die weitere Datenverbindung 44, basierend auf der von dem Positionsinformationsleser 30 ermittelten vorbestimmten Position steuern.

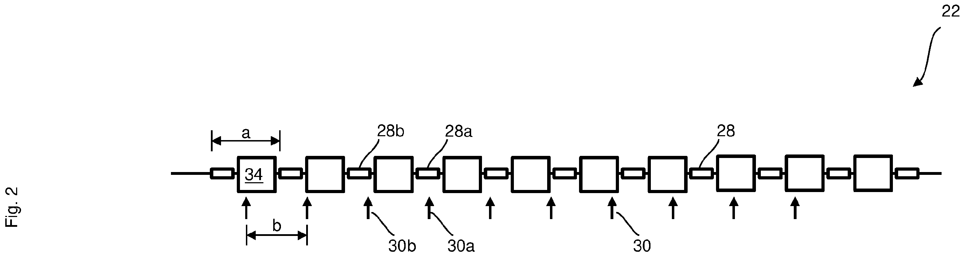

Fig. 2 zeigt eine schematische Darstellung eines Ausschnitts der Schleppantenne 22 mit 10 Unterwasserschallempfängern 34. Zwischen den Unterwasserschallempfängern ist jeweils ein Positionsinformationsträger 28 angeordnet. Die Positionsinformationsträger sind vorteilhafterweise nicht auf den Unterwasserschallempfängern 34 angeordnet um deren Empfang von Unterwasserschallsignalen nicht zu stören. Die Positionsinformationsträger 28 sind äquidistant angeordnet. Benachbarte Positionsinformationsträger weisen einen Abstand a zueinander auf.

Ferner sind beispielhaft 10 Positionsinformationsleser 30 zum Detektieren der Positionsinformationsträger 28 gezeigt. Die Positionsinformationsleser 30 sind ebenfalls äquidistant angeordnet. Benachbarte Positionsinformationsleser weisen jedoch einen Abstand b zueinander auf. Der Abstand a unterscheidet sich von dem Abstand b. Vorteilhafterweise sind beide auch keine ganzzahligen Vielfachen voneinander. So kann die Auflösung zur Detektion der Positionsinformationsträger erhöht werden. Mit nur einem Positionsinformationsleser würde die Auflösung dem Abstand a entsprechen. Aus Fig. 2 wird aber deutlich, dass aktuell der vierte Positionsinformationsleser 30a den Positionsinformationsträger 28a detektiert bzw. das stärkste Signal empfängt. Wird die Schleppantenne 22 nach rechts verschoben detektiert der dritte Positionsinformationsleser 30b umgehend den benachbarten Positionsinformationsträger 28b ohne dass die Schleppantenne die Strecke a zurücklegen muss. Die Auflösung ist mit einer entsprechenden äquidistanten Anordnung einer Vielzahl von Positionsinformationslesern deutlich verbessert.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste:

- 20: Wasserfahrzeug
- 22: Schleppantenne
- 24: Schleppantennenanordnung
- 26: Winde
- 28: Positionsinformationsträger
- 30: Positionsinformationsleser
- 32: Zugseil
- 34: Unterwasserschallempfänger
- 36: Verbindungsseil
- 38: Umlenkrolle
- 40: Windensteuerung
- 42: Datenverbindung
- 44: weitere Datenverbindung

## Patentansprüche

1. Vorrichtung zum Einholen und/oder Ausbringen einer Schleppantenne (22) von einem Wasserfahrzeug 20 mit folgenden Merkmalen:
einer Schleppantennenanordnung (24), die die Schleppantenne (22) umfasst, wobei die Schleppantenne (22) eine Vielzahl von miteinander verbundenen, insbesondere konsekutiv angeordneten, Unterwasserschallempfängern (34) aufweist;
einer Winde (26) mit einer Windensteuerung (40); und gekennzeichnet mit weiterhin
einem Positionsinformationsträger (28) und einem Positionsinformationsleser (30), wobei der Positionsinformationsträger (28) oder der Positionsinformationsleser (30) an einer vorbestimmten Position an der Schleppantennenanordnung angeordnet ist;
wobei die Winde (26) ausgebildet ist, die Schleppantennenanordnung (24) relativ zu dem Positionsinformationsleser (30) zu bewegen, so dass der Positionsinformationsträger (28) den Positionsinformationsleser (30) passiert;
wobei der Positionsinformationsleser (30) ausgebildet ist, beim Passieren des Positionsinformationsträgers (28) die vorbestimmte Position zu ermitteln;
wobei die Windensteuerung (40) ausgebildet ist, die Winde (26) basierend auf der ermittelten vorbestimmten Position zu steuern.

2. Vorrichtung gemäß Anspruch 1,
wobei der Positionsinformationsträger (28) an einer vorbestimmten Position der Schleppantennenanordnung (24) angeordnet ist und wobei der Positionsinformationsleser (30), an dem Wasserfahrzeug (20) angeordnet ist; oder
wobei der Positionsinformationsleser (30) an einer vorbestimmten Position der Schleppantennenanordnung (24) angeordnet ist und wobei der Positionsinformationsträger (28), an dem Wasserfahrzeug (20) angeordnet ist.

3. Vorrichtung gemäß einem der vorherigen Ansprüche,
wobei der Positionsinformationsträger (28) eine Information hinsichtlich der vorbestimmten Position aufweist,
wobei der Positionsinformationsleser (30) ausgebildet ist, die Information beim Passieren des Positionsinformationsträgers auszulesen, um die vorbestimmte Position zu ermitteln.

4. Vorrichtung gemäß einem der vorherigen Ansprüche,
wobei der Positionsinformationsträger (28) einen Transponder umfasst, der ausgebildet ist, eine Information hinsichtlich der vorbestimmten Position in elektromagnetischen Wellen zu kodieren;
wobei der Positionsinformationsleser (30) ausgebildet ist, die kodierten elektromagnetischen Wellen beim Passieren des Positionsinformationsträgers zu empfangen und die Information hinsichtlich der vorbestimmten Position auszulesen um die vorbestimmte Position zu ermitteln.

5. Vorrichtung (20) gemäß einem der vorherigen Ansprüche,
wobei der Positionsinformationsleser (30) ausgebildet ist, die ermittelte vorbestimmte Position an die Windensteuerung zu senden;
wobei die Windensteuerung (40) ausgebildet ist, eine Rotationsgeschwindigkeit der Winde in Abhängigkeit von der ausgelesenen vorbestimmten Position einzustellen.

6. Vorrichtung gemäß Anspruch 5,
wobei die Schleppantennenanordnung (24) neben der Schleppantenne (22) ein Zugseil (32) aufweist;
wobei die vorbestimmte Position des Positionsinformationsträgers (28) derart gewählt ist, dass die vorbestimmte Position einen Übergang zwischen dem Zugseil (32) und der Schleppantenne (22) beschreibt;
wobei die Windensteuerung ausgebildet ist, das Zugseil (32) mit einer Geschwindigkeit auf- und/oder abzurollen, die schneller ist, als eine Geschwindigkeit mit der die Schleppantenne (22) auf- und/oder abgerollt wird.

7. Vorrichtung gemäß einem der Ansprüche 5 oder 6,
wobei die vorbestimmte Position des Positionsinformationsträgers (28) derart gewählt ist, dass die vorbestimmte Position eine Endposition der Schleppantennenanordnung (24) beschreibt;
wobei die Windensteuerung (40) ausgebildet ist, ein Aufrollen der Schleppantennenanordnung (24) zu stoppen, wenn der Positionsinformationsleser (30) die vorbestimmte Position ermittelt;
oder
wobei ein zweiter Positionsinformationsträger (28) an der Schleppantennenanordnung (24) an einer zweiten vorbestimmten Position angeordnet ist, wobei die zweite vorbestimmte Position eine Endposition der Schleppantennenanordnung (24) beschreibt;
wobei die Windensteuerung (40) ausgebildet ist, ein Aufrollen der Schleppantennenanordnung zu stoppen, wenn der Positionsinformationsleser (30) die zweite vorbestimmte Position ermittelt.

8. Vorrichtung gemäß einem der Ansprüche 5 bis 7,
wobei die vorbestimmte Position des Positionsinformationsträgers (28) derart gewählt ist, dass die vorbestimmte Position eine Endposition beim Ausfahren der Schleppantennenanordnung (24) beschreibt;
wobei die Windensteuerung (40) ausgebildet ist, ein Abrollen der Schleppantennenanordnung (24) zu stoppen, wenn der Positionsinformationsleser die vorbestimmte Position ermittelt.
oder
wobei ein weiterer Positionsinformationsträger (28) an der Schleppantennenanordnung (24) an einer weiteren vorbestimmten Position angeordnet ist, wobei die weitere vorbestimmte Position eine Endposition beim Ausfahren der Schleppantennenanordnung (24) beschreibt;
wobei die Windensteuerung (40) ausgebildet ist, ein Abrollen der Schleppantennenanordnung (24) zu stoppen, wenn der Positionsinformationsleser die weitere vorbestimmte Position ermittelt.

9. Vorrichtung gemäß einem der Ansprüche 5 bis 8,
wobei die Windensteuerung (40) ausgebildet ist, das Eintreffen einer Positionsinformation zu prädizieren und wenn die prädizierte Positionsinformation von dem Positionsinformationsleser (30) ausbleibt, eine Rotationsgeschwindigkeit der Winde (26) zu reduzieren.

10. Vorrichtung gemäß einem der vorherigen Ansprüche,
mit einem zweiten Positionsinformationsleser (30'), der an dem Wasserfahrzeug beabstandet von dem Positionsinformationsleser (30) angeordnet ist;
wobei die Winde (26) ausgebildet ist, die Schleppantennenanordnung (24) relativ zu dem zweiten Positionsinformationsleser (30') zu bewegen, so dass der Positionsinformationsträger (28) den zweiten Positionsinformationsleser (30') passiert;
wobei der zweite Positionsinformationsleser (30') ausgebildet ist, beim Passieren des Positionsinformationsträgers (28) die vorbestimmte Position des passierenden Positionsinformationsträgers (28) zu ermitteln.

11. Vorrichtung gemäß Anspruch 10,
wobei die Windensteuerung (40) ausgebildet ist, die von dem Positionsinformationsleser (30) ermittelte vorbestimmte Position zu erhalten und einen Zeitpunkt zu prädizieren, an dem die vorbestimmte Position oder eine weitere vorbestimmte Position von dem zweiten Positionsinformationsleser (30') ermittelt werden müsste und wenn der Zeitpunkt verstrichen ist, ohne dass der zweite Positionsinformationsleser (30') die vorbestimmte Position oder die weitere vorbestimmte Position ermittelt hat, eine Rotationsgeschwindigkeit der Winde (26) zu reduzieren.

12. Vorrichtung gemäß einem der vorherigen Ansprüche,
mit einer Vielzahl von Positionsinformationsträgern (28, 28'), wobei der Positionsinformationsträger (28) ein Positionsinformationsträger aus der Vielzahl von Positionsinformationsträgern (28, 28') ist, wobei die Positionsinformationsträger der Vielzahl von Positionsinformationsträgern jeweils an einer vorbestimmten Position der Schleppantennenanordnung (24) angeordnet sind;
wobei die Winde (26) ausgebildet ist, die Schleppantennenanordnung (24) relativ zu dem Positionsinformationsleser (30) zu bewegen, so dass die Positionsinformationsträger (28, 28') der Vielzahl von Positionsinformationsträgern den Positionsinformationsleser (30) passieren;
wobei der Positionsinformationsleser ausgebildet ist, beim Passieren eines Positionsinformationsträgers (28, 28') der Vielzahl von Positionsinformationsträgern die zugehörige vorbestimmte Position zu ermitteln.

13. Vorrichtung gemäß Anspruch 12,
wobei die Positionsinformationsträger (28, 28') der Vielzahl von Positionsinformationsträgern äquidistant angeordnet sind.

14. Vorrichtung gemäß Anspruch 13,
wobei der Positionsinformationsleser (30) ein Positionsinformationsleser aus einer Vielzahl von Positionsinformationslesern (30, 30') ist, wobei die Positionsinformationsleser der Vielzahl von Positionsinformationsleser äquidistant in einem ersten Abstand (b) zueinander angeordnet sind, wobei die Vielzahl von Positionsinformationsträgern äquidistant in einem zweiten Abstand (a) zueinander angeordnet sind, wobei sich der erste Abstand von dem zweiten Abstand unterscheidet.

15. Verfahren zum Einholen und Ausbringen einer Schleppantenne von einem Wasserfahrzeug mit folgenden Schritten:
Bewegen einer Schleppantennenanordnung, die die Schleppantenne umfasst, relativ zu einem Positionsinformationsleser, so dass ein Positionsinformationsträger den Positionsinformationsleser passiert, wobei der Positionsinformationsträger (28) oder der Positionsinformationsleser (30) an einer vorbestimmten Position an der Schleppantennenanordnung angeordnet ist;
Ermitteln der vorbestimmten Position mit dem Positionsinformationsleser;
Steuern einer Winde zum Einholen und/oder Ausbringen der Schleppantennenanordnung unter Berücksichtigung der ermittelten vorbestimmten Position.

## Claims

1. Apparatus for recovering and/or deploying a towed antenna (22) from a watercraft 20, having the following features:
a towed antenna arrangement (24) comprising the towed antenna (22), the towed antenna (22) having a plurality of interconnected, in particular consecutively arranged, underwater sound receivers (34);
a winch (26) with a winch control (40); and further **characterized by**
a position information carrier (28) and a position information reader (30), wherein the position information carrier (28) or the position information reader (30) is arranged at a predetermined position on the towed antenna arrangement;
wherein said winch (26) is configured to move said trailing antenna assembly (24) relative to said position information reader (30) so that said position information carrier (28) passes said position information reader (30);
wherein the position information reader (30) is configured to determine the predetermined position as the position information carrier (28) passes;
wherein the winch controller (40) is configured to control the winch (26) based on the determined predetermined position.

2. Apparatus according to claim 1,
wherein the position information carrier (28) is arranged at a predetermined position of the towed antenna arrangement (24) and wherein the position information reader (30) is arranged on the watercraft (20);
or
wherein the position information reader (30) is disposed at a predetermined position of the trailing antenna assembly (24) and wherein the position information carrier (28) is disposed on the watercraft (20).

3. Apparatus according to any one of the preceding claims,
wherein the position information carrier (28) comprises information regarding the predetermined position,
wherein said position information reader (30) is configured to read said information when passing said position information carrier to determine said predetermined position.

4. Apparatus according to any one of the preceding claims,
wherein the position information carrier (28) comprises a transponder configured to encode information regarding the predetermined position in electromagnetic waves;
wherein the position information reader (30) is configured to receive the encoded electromagnetic waves as they pass the position information carrier and to read out the information relating to the predetermined position to determine the predetermined position.

5. Apparatus (20) according to any one of the preceding claims,
wherein the position information reader (30) is configured to transmit the determined predetermined position to the winch controller;
wherein the winch controller (40) is configured to adjust a rotational speed of the winch in dependence on the read predetermined position.

6. Apparatus according to claim 5,
wherein the towed antenna arrangement (24) comprises a towing cable (32) adjacent the towed antenna (22);
wherein the predetermined position of the position information carrier (28) is selected such that the predetermined position describes a transition between the tow rope (32) and the trailing antenna (22);
wherein the winch control is configured to wind and/or unwind the towline (32) at a speed faster than a speed at which the trailing antenna (22) is wound and/or unwound.

7. Apparatus according to any one of claims 5 or 6,
wherein the predetermined position of the position information carrier (28) is selected such that the predetermined position describes an end position of the trailing antenna assembly (24);
wherein the winch controller (40) is configured to stop a winding of the trailing antenna array (24) when the position information reader (30) detects the predetermined position;
or
wherein a second position information carrier (28) is disposed on the trailing antenna assembly (24) at a second predetermined position, the second predetermined position describing an end position of the trailing antenna assembly (24);
wherein the winch controller (40) is configured to stop a winding of the trailing antenna assembly when the position information reader (30) detects the second predetermined position.

8. Apparatus according to any one of claims 5 to 7,
wherein the predetermined position of the position information carrier (28) is selected such that the predetermined position describes an end position upon deployment of the trailing antenna array (24);
wherein the winch controller (40) is configured to stop an unrolling of the trailing antenna assembly (24) when the position information reader detects the predetermined position.
or
wherein a further position information carrier (28) is arranged on the trailing antenna assembly (24) at a further predetermined position, the further predetermined position describing an end position when the trailing antenna assembly (24) is extended;
wherein the winch controller (40) is configured to stop an unrolling of the trailing antenna assembly (24) when the position information reader detects the further predetermined position.

9. Apparatus according to any one of claims 5 to 8,
wherein the winch controller (40) is configured to predict the arrival of position information and, when the predicted position information from the position information reader (30) is absent, to reduce a rotational speed of the winch (26).

10. Apparatus according to any one of the preceding claims,
comprising a second position information reader (30') disposed on the watercraft spaced from the position information reader (30);
wherein the winch (26) is configured to move the towed antenna assembly (24) relative to the second position information reader (30') so that the position information carrier (28) passes the second position information reader (30');
wherein the second position information reader (30') is configured to determine the predetermined position of the passing position information carrier (28) when the position information carrier (28) passes.

11. Apparatus according to claim 10,
wherein the winch controller (40) is configured to receive the predetermined position determined by the position information reader (30) and to predict a time at which the predetermined position or a further predetermined position would need to be determined by the second position information reader (30') and, if the time has elapsed without the second position information reader (30') having determined the predetermined position or the further predetermined position, to reduce a rotational speed of the winch (26).

12. Apparatus according to any one of the preceding claims,
comprising a plurality of position information carriers (28, 28'), wherein the position information carrier (28) is one position information carrier among the plurality of position information carriers (28, 28'), wherein the position information carriers of the plurality of position information carriers are each arranged at a predetermined position of the trailing antenna array (24);
wherein the winch (26) is configured to move the trailing antenna array (24) relative to the position information reader (30) so that the position information carriers (28, 28') of the plurality of position information carriers pass the position information reader (30);
wherein the position information reader is configured to determine the associated predetermined position when a position information carrier (28, 28') of the plurality of position information carriers passes.

13. Apparatus according to claim 12,
wherein the position information carriers (28, 28') of the plurality of position information carriers are arranged equidistantly.

14. Apparatus according to claim 13,
wherein the position information reader (30) is one of a plurality of position information readers (30, 30'), the position information readers of the plurality of position information readers being equidistantly arranged at a first distance (b) from each other, the plurality of position information carriers being equidistantly arranged at a second distance (a) from each other, the first distance being different from the second distance.

15. A method of recovering and deploying a towed antenna from a watercraft comprising the steps of:
moving a towed antenna assembly comprising the towed antenna relative to a position information reader so that a position information carrier passes the position information reader, wherein the position information carrier (28) or the position information reader (30) is arranged at a predetermined position on the towed antenna assembly;
determining the predetermined position with the position information reader;
controlling a winch for retrieving and/or deploying the towed antenna array taking into account the determined predetermined position.

## Revendications

1. Dispositif de récupération et/ou de déploiement d'une antenne remorquée (22) d'un bateau 20, présentant les caractéristiques suivantes :
un ensemble d'antennes traînantes (24) comprenant l'antenne traînante (22), l'antenne traînante (22) comportant une pluralité de récepteurs acoustiques sous-marins (34) reliés entre eux, notamment disposés de manière consécutive ;
un treuil (26) avec une commande de treuil (40) ; et **caractérisé en outre par**
un support d'informations de position (28) et un lecteur d'informations de position (30), le support d'informations de position (28) ou le lecteur d'informations de position (30) étant disposé à une position prédéterminée sur l'ensemble d'antennes remorquées ;
dans lequel le treuil (26) est adapté pour déplacer l'ensemble d'antennes traînantes (24) par rapport au lecteur d'informations de position (30) de sorte que le support d'informations de position (28) passe devant le lecteur d'informations de position (30) ;
le lecteur d'informations de position (30) étant conçu pour déterminer la position prédéterminée lors du passage du support d'informations de position (28) ;
dans lequel la commande de treuil (40) est adaptée pour commander le treuil (26) sur la base de la position prédéterminée déterminée.

2. Dispositif selon la revendication 1,
dans lequel le support d'informations de position (28) est disposé à une position prédéterminée de l'ensemble d'antennes remorquées (24) et dans lequel le lecteur d'informations de position (30) est disposé sur l'embarcation (20) ;
ou
dans lequel le lecteur d'informations de position (30) est situé à une position prédéterminée de l'ensemble d'antennes remorquées (24) et dans lequel le support d'informations de position (28) est situé sur l'embarcation (20).

3. Dispositif selon l'une quelconque des revendications précédentes,
dans lequel le support d'informations de position (28) comporte des informations relatives à la position prédéterminée,
le lecteur d'information de position (30) étant configuré pour lire l'information au passage du support d'information de position afin de déterminer la position prédéterminée.

4. Dispositif selon l'une quelconque des revendications précédentes,
dans lequel le support d'informations de position (28) comprend un transpondeur adapté pour coder en ondes électromagnétiques une information relative à la position prédéterminée ;
dans lequel le lecteur d'informations de position (30) est adapté pour recevoir les ondes électromagnétiques codées lors du passage du support d'informations de position et pour lire les informations relatives à la position prédéterminée afin de déterminer la position prédéterminée.

5. Dispositif (20) selon l'une quelconque des revendications précédentes,
dans lequel le lecteur d'informations de position (30) est adapté pour envoyer la position prédéterminée déterminée à la commande de treuil ;
dans lequel le contrôleur de treuil (40) est configuré pour ajuster une vitesse de rotation du treuil en fonction de la position prédéterminée lue.

6. Dispositif selon la revendication 5,
dans lequel l'ensemble d'antennes traînantes (24) comporte, outre l'antenne traînante (22), un câble de traction (32) ;
la position prédéterminée du support d'informations de position (28) étant choisie de telle sorte que la position prédéterminée décrive une transition entre le câble de traction (32) et l'antenne remorquée (22) ;
la commande de treuil étant adaptée pour enrouler et/ou dérouler le câble de traction (32) à une vitesse plus rapide qu'une vitesse à laquelle l'antenne remorquée (22) est enroulée et/ou déroulée.

7. Dispositif selon l'une des revendications 5 ou 6,
dans lequel la position prédéterminée du support d'informations de position (28) est choisie de manière à ce que la position prédéterminée décrive une position finale de l'ensemble d'antennes traînantes (24) ;
dans lequel la commande de treuil (40) est adaptée pour arrêter un enroulement de l'ensemble d'antennes traînantes (24) lorsque le lecteur d'informations de position (30) détecte la position prédéterminée ;
ou
dans lequel un deuxième support d'informations de position (28) est disposé sur l'ensemble d'antennes traînantes (24) à une deuxième position prédéterminée, la deuxième position prédéterminée décrivant une position finale de l'ensemble d'antennes traînantes (24) ;
dans lequel la commande de treuil (40) est adaptée pour arrêter un enroulement de l'ensemble d'antennes traînantes lorsque le lecteur d'informations de position (30) détermine la deuxième position prédéterminée.

8. Dispositif selon l'une quelconque des revendications 5 à 7,
dans lequel la position prédéterminée du support d'informations de position (28) est choisie de manière à ce que la position prédéterminée décrive une position finale lors du déploiement de l'ensemble d'antennes traînantes (24) ;
dans lequel la commande de treuil (40) est adaptée pour arrêter un déroulement de l'ensemble d'antennes traînantes (24) lorsque le lecteur d'informations de position détermine la position prédéterminée.
ou
un autre support d'informations de position (28) étant disposé sur l'ensemble d'antennes traînantes (24) à une autre position prédéterminée, l'autre position prédéterminée décrivant une position finale lors du déploiement de l'ensemble d'antennes traînantes (24) ;
dans lequel la commande de treuil (40) est adaptée pour arrêter un déroulement de l'ensemble d'antennes traînantes (24) lorsque le lecteur d'informations de position détermine l'autre position prédéterminée.

9. Dispositif selon l'une quelconque des revendications 5 à 8,
dans lequel le contrôleur de treuil (40) est adapté pour prédire l'arrivée d'une information de position et, en l'absence de l'information de position prédite provenant du lecteur d'information de position (30), pour réduire une vitesse de rotation du treuil (26).

10. Dispositif selon l'une quelconque des revendications précédentes,
comprenant un deuxième lecteur d'informations de position (30') disposé sur l'embarcation, à distance du lecteur d'informations de position (30) ;
dans lequel le treuil (26) est adapté pour déplacer l'ensemble d'antenne remorquée (24) par rapport au deuxième lecteur d'informations de position (30') de sorte que le support d'informations de position (28) passe devant le deuxième lecteur d'informations de position (30') ;
le deuxième lecteur d'informations de position (30') étant configuré pour déterminer, lors du passage du support d'informations de position (28), la position prédéterminée du support d'informations de position (28) qui passe.

11. Dispositif selon la revendication 10,
dans lequel le contrôleur de treuil (40) est adapté pour obtenir la position prédéterminée déterminée par le lecteur d'informations de position (30) et pour prédire un instant auquel la position prédéterminée ou une autre position prédéterminée devrait être déterminée par le deuxième lecteur d'informations de position (30') et, lorsque l'instant est passé sans que le deuxième lecteur d'informations de position (30') ait déterminé la position prédéterminée ou l'autre position prédéterminée, pour réduire une vitesse de rotation du treuil (26).

12. Dispositif selon l'une quelconque des revendications précédentes,
comprenant une pluralité de supports d'informations de position (28, 28'), le support d'informations de position (28) étant un support d'informations de position parmi la pluralité de supports d'informations de position (28, 28'), les supports d'informations de position de la pluralité de supports d'informations de position étant chacun disposés à une position prédéterminée de l'ensemble d'antennes remorquées (24) ;
dans lequel le treuil (26) est adapté pour déplacer l'ensemble d'antennes traînantes (24) par rapport au lecteur d'informations de position (30), de sorte que les supports d'informations de position (28, 28') de la pluralité de supports d'informations de position passent devant le lecteur d'informations de position (30) ;
le lecteur d'informations de position étant conçu pour déterminer la position prédéterminée correspondante lors du passage d'un support d'informations de position (28, 28') de la pluralité de supports d'informations de position.

13. Dispositif selon la revendication 12,
dans lequel les supports d'informations de position (28, 28') de la pluralité de supports d'informations de position sont disposés de manière équidistante.

14. Dispositif selon la revendication 13,
dans lequel le lecteur d'informations de position (30) est un lecteur d'informations de position parmi une pluralité de lecteurs d'informations de position (30, 30'), les lecteurs d'informations de position de la pluralité de lecteurs d'informations de position étant disposés de manière équidistante à une première distance (b) les uns des autres, la pluralité de supports d'informations de position étant disposés de manière équidistante à une deuxième distance (a) les uns des autres, la première distance étant différente de la deuxième distance.

15. Procédé de récupération et de déploiement d'une antenne remorquée d'un navire, comprenant les étapes suivantes :
déplacement d'un ensemble d'antennes de remorquage comprenant l'antenne de remorquage par rapport à un lecteur d'informations de position de sorte qu'un support d'informations de position passe devant le lecteur d'informations de position, le support d'informations de position (28) ou le lecteur d'informations de position (30) étant placé à une position prédéterminée sur l'ensemble d'antennes de remorquage ;
déterminer la position prédéterminée avec le lecteur d'informations de position ;
commander un treuil pour hisser et/ou déployer l'ensemble d'antennes remorquées en tenant compte de la position prédéterminée déterminée.
